# FASCICULE DE BREVET EUROPEEN

(11) **EP 1 038 139 B1**
(45) Date de publication et mention de la délivrance du brevet: **24.07.2002**
(21) Numéro de dépôt: 98958955.1
(22) Date de dépôt: 04.12.1998
(51) Int. Cl.: F16L 21/08, F16L 13/02

(54) **DISPOSITIF DE RACCORDEMENT ETANCHE DE TUBES POUR LE TRANSPORT DE FLUIDE**
VORRICHTUNG ZUM DICHTEN VERBINDEN VON ROHREN FÜR DEN TRANSPORT VON FLÜSSIGKEITEN
DEVICE FOR SEALED CONNECTION OF TUBES TRANSPORTING FLUID

(30) Priorité: 09.12.1997 FR 9715828
(43) Date de publication de la demande: 27.09.2000
(73) Titulaire: SA Hydrotechnique, 03200 Vichy (FR)
(72) Inventeur: TAIEL, Georges, F-03300 Cusset (FR)
(74) Mandataire: Perrier, Jean-Pierre
(86) Numéro de dépôt international: FR9802630
(87) Numéro de publication internationale: WO9930070

(56) Documents cités:
- CH-A- 678 220
- DE-B- 1 459 590
- DE-C- 693 490
- FR-A- 1 050 410

## Description

L'invention est relative à un dispositif de raccordement étanche de tubes pour le transport de fluide et, par exemple pour l'adduction d'eau.

Elle vise plus particulièrement les dispositifs dans lesquels chaque tube est muni d'une extrémité cylindrique et d'une extrémité en forme de tulipe apte à s'emboîter avec l'extrémité cylindrique d'un autre tube en emprisonnant un joint annulaire d'étanchéité.

La plupart des tubes en fonte ductile et des tubes en matière synthétique, et par exemple en polychlorure de vinyle, sont raccordés entre eux à l'aide d'un dispositif de jonction automatique. Lors de l'opération d'emboîtement, l'étanchéité est assurée par la compression radiale d'un joint annulaire en élastomère dans la tulipe du tube.

Les caractéristiques principales des jonctions dites automatiques sont :
- facilité et rapidité de mise en oeuvre par du personnel non qualifié,
- bonne tenue à la pression hydrostatique,
- possibilité de jeu axial et de déviation angulaire.

Par contre, ce type de jonction ne permet pas de supporter les forces longitudinales engendrées par les surpressions, telles que coup de béliers, par les poussées hydrauliques subies par la conduite lors de ses changements de direction, ou par des instabilités du terrain.

Pour reprendre ces efforts de poussée, on utilise généralement des massifs en béton. Dimensionnés au cas par cas, en fonction des contraintes d'exploitation et de la nature des terrains, ces massifs encastrent la conduite dans le terrain et constituent ainsi, soit des massifs poids, s'ils agissent par frottement sur le sol, soit des massifs butée, lorsqu'ils prennent appui sur le terrain en place.

Lorsqu'il existe des contraintes d'encombrement ou si les terrains sont de mauvaise qualité, on utilise des systèmes de jonction mécanique (boulonnage des joints) ou des systèmes de jonction dits verrouillés (cas de la fonte) ou à brides.

Sur les tubes en fonte ductile, les dispositifs de jonction. automatique à joint en élastomère ne sont pas verrouillables automatiquement dans toute la gamme de diamètres. Un fabricant propose un système de jonction automatique à joint en élastomère équipé de griffes en acier permettant un accrochage des tubes entre eux lors de poussée longitudinale, mais cela uniquement jusqu'au diamètre 300 mm.

L'utilisation de cette jonction verrouillable par griffes suppose qu'elle ait été prévue avant le début des travaux de pose. Elle est 20 % plus chère que le dispositif conventionnel, mais simple à employer.

Pour les diamètres supérieurs à 300 millimètres, les dispositifs de jonction proposés sont complexes, car nécessitant plusieurs pièces et des coupes sur tubes. Les opérations de boulonnage des brides et contre brides sont longues et coûteuses.

La fiabilité de la jonction et son étanchéité sont fortement dépendantes de la qualité et de l'expérience du personnel de pose.

L'entreprise assurant la pose doit impérativement prévoir à l'avance le besoin de tel ou tel type de joint, car ils ne sont pas compatibles entre eux, et il n'est pas possible de verrouiller un dispositif de jonction automatique conventionnel.

Il apparaît donc que, actuellement et pour les tubes en fonte ductile, l'entreprise de pose a le choix entre un dispositif de jonction automatique standard, ou un dispositif à verrouiller, puisqu'il n'existe pas un dispositif automatique standard, "verrouillable sur option".

Pour les tubes en matière synthétique, il n'existe pas de dispositif de jonction verrouillable. A défaut des massifs en béton, on utilise des raccords mécaniques et brides, coûteux et longs à mettre en oeuvre. On retrouve les mêmes inconvénients que ceux rencontrés pour les conduites en fonte, voire plus, compte tenu des faibles épaisseurs des conduites en matière synthétique.

Pour les tubes en acier, la technique de jonction est la soudure. De ce fait, une conduite en acier est automatiquement verrouillée. L'étanchéité et la reprise des poussées sont réalisées par la soudure continue formant joint. La pose d'une conduite en acier ainsi réalisée ne nécessite pas de massifs en béton. Toutefois, cette technique présente d'autres inconvénients :
- la réalisation des soudures sur site rend ce type de jonction, par ailleurs très performante, 15 à 20 % plus chère que la jonction dite automatique s'appliquant à une conduite non verrouillée,
- le temps de soudage est long parce que le jeu d'emboîtement est important; de l'ordre de 2 à 3,5 millimètres au rayon, et que plusieurs passes de soudage sont nécessaires pour combler ce jeu. De plus, ce type de soudure ne peut être réalisé que par un soudeur compétent, de plus en plus rare et onéreux,
- enfin, quand on est en présence d'un tube en acier revêtu intérieurement par une couche en matière synthétique ne résistant pas aux températures de soudage, l'entreprise doit obligatoirement refaire le revêtement intérieur au droit de chaque soudure. Cette opération est délicate et impossible à réaliser dans les petits et moyens diamètres.

La présente invention a pour objet de remédier à ces inconvénients en fournissant un dispositif de raccordement étanche, peu onéreux à réaliser, facile à mettre en oeuvre, réduisant les jeux d'emboîtement et assurant une jonction automatique des tubes en présence, cette jonction, toujours calée en translation dans un sens, pouvant ou non être calée dans l'autre sens, donc verrouillée, à la demande, sans qu'il soit nécessaire de le prévoir avant le chantier et sans apport de pièces complémentaires.

Le brevet allemand 693 490 décrit un dispositif de raccordement étanche de tubes en acier selon lequel la tulipe est munie d'un collet tronconique qui, en fin d'engagement de l'élément mâle dans la tulipe, vient en appui sur le bord supérieur d'un flanc tronconique faisant partie d'un anneau entourant cet élément mâle et lié à lui par soudure.

Après engagement, le verrouillage peut être réalisé au moyen d'un cordon de soudure liant le collet au flanc tronconique. Cette dernière est d'autant plus difficile à réaliser que le positionnement radial des deux éléments du raccord est imprécis en raison des jeux fonctionnels radiaux et des difficultés rencontrées lors de la pose pour aligner les tubes.

Par ailleurs, le joint d'étanchéité est porté par l'élément mâle, de sorte qu'il peut être souillé avant l'opération de raccordement et qu'il peut être retourné lors de l'emboîtement de l'élément mâle dans l'élément femelle.

En outre, si le joint est un joint à lèvres avec des lèvres tournées radialement vers la tulipe, comme l'exige la réglementation concernant l'adduction d'eau, l'emboîtement favorise l'inclinaison de ces lèvres du côté l'embouchure de la tulipe et non du côté opposé, comme cela est souhaitable pour résister à la pression régnant à l'intérieur du tube.

En raison de ces inconvénients, ce dispositif de raccordement n'est pas utilisé.

L'invention reprend certains éléments de ce dispositif, à savoir tulipe avec collet tronconique et élément mâle avec anneau ayant un flanc tronconique pour limiter l'engagement longitudinal lors de l'emboîtement, mais les combine différemment pour obtenir un dispositif de raccordement étanche insensible aux conditions de pose, fiable et verrouillable à la demande pour une opération simple, ne faisant pas appel à un personnel hautement qualifié.

A cet effet, dans le dispositif de raccordement selon l'invention, la tulipe la tulipe est solidaire d'un joint d'étanchéité disposé dans une gorge ménagée dans cette tulipe entre le collet tronconique et la partie cylindrique apte à recevoir l'extrémité cylindrique mâle, tandis que l'anneau entourant l'extrémité mâle est lié au tube par collage ou soudage de ses deux bords circulaires, et que son flanc tronconique a la même conicité que celle du collet pour former, en fin d'emboîtement, cône de positionnement radial des deux éléments.

Grâce à cet agencement, le joint pouvant être mis en place en usine à l'intérieur de la tulipe, reste toujours protégé des salissures et détériorations. S'il possède des lèvres, lors de l'engagement de l'élément mâle, celles-ci se déforment dans le bon sens puisqu'elles s'inclinent en direction du tube et non de l'embouchure de la tulipe. En fin d'engagement, le collet tronconique, recevant l'appui par toute sa surface, du flanc tronconique de l'anneau de l'élément mâle, déplace radialement l'élément mâle du tube en cours de pose pour l'aligner avec le tube posé, en supprimant ainsi les écarts de positionnement des lèvres du joint, mais aussi du bord du collet avec le flanc. Ainsi, le joint peut travailler dans des conditions favorables à la conservation de son étanchéité. De même, lors du verrouillage ultérieur du collet sur l'anneau, il n'est pas nécessaire de compenser les jeux radiaux par des apports importants de colle ou de soudure, ce qui permet de faire réaliser ces opérations par un personnel peu qualifié.

Le positionnement radial des éléments en cours d'emboîtement est d'autant plus sûr que l'anneau est lié à l'élément mâle par ses deux bords circulaires et forme ainsi une structure pratiquement indéformable.

Un autre avantage de ce dispositif de raccordement est que, par sa forme, il s'encastre naturellement dans le terrain remblayé autour de la conduite. Cela a pour conséquence d'augmenter la surface de frottement avec le terrain, et d'assurer, si le terrain est de bonne qualité, l'autocalage en translation longitudinale dans les deux sens de la conduite.

Dans une forme d'exécution de l'invention, l'anneau entourant l'extrémité cylindrique de chaque tube présente, à l'opposé du flanc tronconique formant appui pour le collet, un autre flanc tronconique constituant cran d'accrochage pour les extrémités coudées d'au moins trois languettes élastiques de verrouillage, ces languettes étant solidaires du collet de la tulipe qu'elles prolongent longitudinalement vers l'extérieur et autour duquel elles sont réparties avec un espace angulaire constant.

Ainsi, en fin d'emboîtement de la tulipe d'un tube sur l'extrémité cylindrique d'un autre tube, les languettes élastiques s'encliquettent automatiquement sur le cran formé par l'anneau et assurent le verrouillage du raccordement.

En cas d'augmentation de la pression de service dans le réseau d'adduction d'eau, il est possible de renforcer le verrouillage automatique par dépôt d'une soudure, discontinue ou continue, entre le collet et l'anneau.

D'autres caractéristiques et avantages ressortiront de la description qui suit en référence au dessin schématique annexé représentant, à titre d'exemple, deux formes d'exécution du dispositif selon l'invention.
Figure 1 est une vue en coupe longitudinale montrant les différents éléments d'une première forme d'exécution de ce dispositif de raccordement,
Figure 2 est une vue en coupe longitudinale montrant les éléments de figure 1, lorsqu'ils sont en position de raccordement,
Figure 3 est une vue partielle en coupe longitudinale montrant les éléments de figure 1, lorsque le raccordement est verrouillé,
Figure 4 est une vue partielle en coupe longitudinale montrant une autre forme d'exécution de ce dispositif.

Ce dispositif de raccordement met en oeuvre des tuyaux ou tubes dont une extrémité, dite femelle A, est conformée en tulipe 1 et dont l'autre extrémité, dite mâle B, est cylindrique et droite.

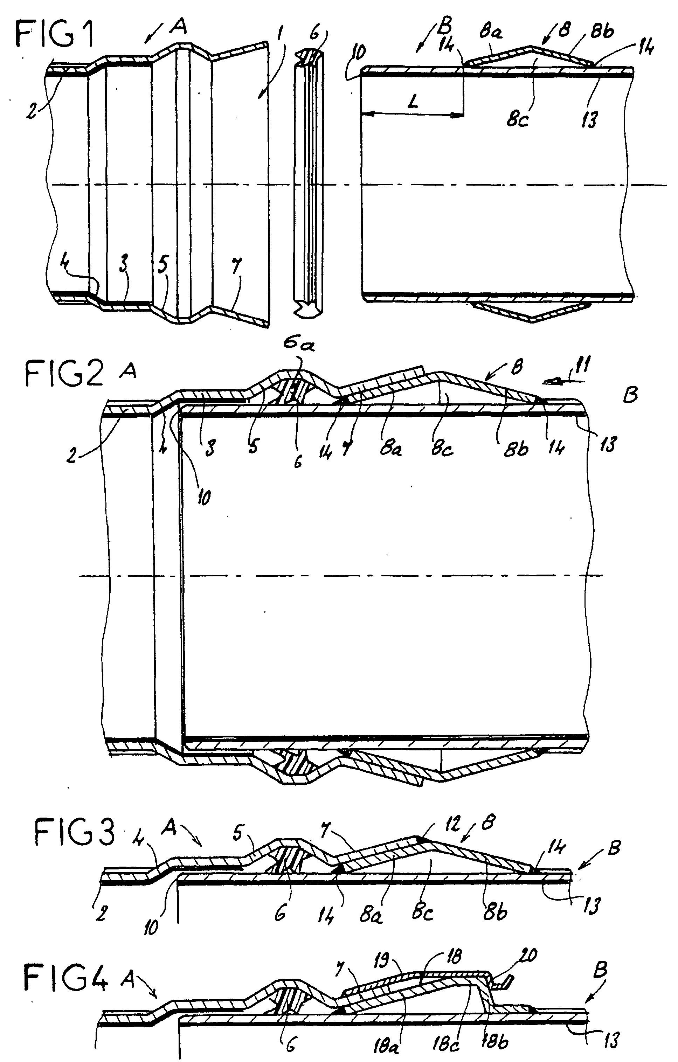

Selon l'invention, et comme montré plus en détails à la figure 1, la tulipe 1 qui prolonge le corps 2 du tube, ou est rapportée à l'extrémité de celui-ci, est composée par une partie cylindrique 3, de plus grand diamètre que le tube et se raccordant à ce tube par une partie tronconique 4. La partie cylindrique 3 se prolonge par une gorge 5, ici biconique, apte à positionner et loger un joint annulaire 6 en élastomère. Le joint 6 est un joint à lèvres dont le talon 6a est disposé dans la gorge 5 avec les lèvres tournées vers l'intérieur de la tulipe. Ce joint est avantageusement mis en place en usine avec un positionnement précis, sans qu'il puisse être déplacé par les manipulations du tube, puisqu'il reste toujours protégé à l'intérieur de la tulipe contre toute détérioration ou salissures. La gorge 5 est prolongée, vers le bout du tube, par un collet tronconique 7 allant en s'évasant vers ce bout.

L'extrémité mâle cylindrique B est entourée par un anneau biconique 8, composé d'un flanc pentu 8a, tourné vers le bout et d'un flanc pentu 8b tourné de l'autre côté, c'est-à-dire vers l'autre extrémité du tube. Aux figures 1 à 3, la conicité des deux flancs est identique mais elle peut être différente, pourvu que la conicité du flanc 8a soit la même que celle du collet 7 qui doit venir en appui sur lui.

L'anneau 8 est espacé du bout du tuyau d'une longueur L qui est déterminée de manière que, lorsque la tulipe 1 est emmanchée sur l'extrémité mâle B, le bout 10 de l'extrémité mâle soit, comme montré à la figure 2, à proximité du raccord tronconique 4, mais sans contact avec lui.

Grâce à cet agencement, le raccordement de ce type de tube s'effectue très aisément par introduction, dans la tulipe 1 du tube en place, de l'embout mâle B du tube en cours de pose, et cela jusqu'à appui du flanc 8a de l'anneau contre le collet 7 de la tulipe, comme montré figure 2. Cet appui assure, par sa forme conique, le positionnement radial des deux tubes, le positionnement longitudinal du tube emmanché par rapport au tube déjà posé, et le calage en translation, dans le sens de la flèche 11, du tube rapporté par rapport au tube posé. Si besoin est, par exemple, pour mieux résister à la pression du terrain ou aux poussées hydrauliques internes, le bord libre du collet 7 est lié au flanc 8a. Pour des tubes en aciers, cette liaison est réalisée par une soudure 12 en plusieurs points ou continue. Pour des tubes en matière synthétique, la liaison est assurée par dépôt d'une colle à la place de la soudure. Pour faciliter cette liaison par soudure ou collage, le flanc 8a est avantageusement plus long que le collet 7.

Lorsque le tube est métallique, et par exemple en acier, l'anneau 8 est constitué par une tôle pliée dont les deux bords circulaires sont liés au tube 2 par des soudures continues 14. Ainsi, l'anneau délimite avec le tube un logement 8c. Lorsque le tube est enduit intérieurement d'un revêtement 13 en matière synthétique, et lors de la réalisation des points de soudure ou de la soudure continue 12 de verrouillage sur le flanc 8a, ce logement 8c assure la protection thermique du revêtement 13, en limitant la transmission de la chaleur de la soudure vers ce revêtement qui, ainsi, n'est pas sujet à une fusion localisée. Dans un tube en acier, la soudure continue des deux bords de l'anneau isole de l'extérieur le logement 8c et évite l'oxydation de l'intérieur de cet anneau.

Lorsque le tube est en matière synthétique, l'anneau 8 est constitué par une bague qui, dans la même matière, est collée sur l'extrémité de l'élément mâle par une colle adaptée à la nature des matières synthétiques en présence.

Il ressort de ce qui précède que le dispositif de raccordement selon l'invention réduit les jeux d'emboîtement et permet, dans le cas d'un raccordement verrouillé de deux tubes métalliques, de réaliser la soudure en une seule passe, ce qui rend cette opération rapide et peu onéreuse et améliore la compétitivité de ce type de raccord, qui peut ainsi être utilisée en remplacement des raccords actuels. Dans ce cas, l'étanchéité de la liaison est assurée d'une part par le joint annulaire 6, et d'autre part, par la soudure, et est donc particulièrement efficace.

Lorsque deux tubes sont assemblés bout à bout, et comme montré à la figure 2, le raccordement s'encastre naturellement dans le terrain remblayé autour de la conduite réalisée et forme une excroissance qui, en augmentant la surface de contact avec ce terrain, augmente les forces de frottement permettant, si le terrain est de bonne qualité, d'assurer le calage en translation de cette conduite par rapport au terrain.

Pour une conduite extérieure posée avec des raccordements non verrouillés, il est possible, en cas de modification des conditions d'exploitation du réseau de fluide et, en particulier, d'augmentation de sa pression interne, d'assurer le verrouillage de chaque raccordement en réalisant sur chacun d'eux, la liaison par soudure ou collage, de chaque anneau avec son collet, ce qui conduit à une procédure beaucoup plus simple que la solution actuelle nécessitant de redémonter toute la conduite pour y associer des moyens de verrouillage.

La forme d'exécution représentée à la figure 4 concerne un dispositif de raccordement à verrouillage mécanique automatique pour tube en acier. L'anneau 18 du tronçon mâle B comporte, à l'opposé du flanc 18a coopérant avec le collet 7, un flanc 18b plus incliné formant un cran 19 avec une partie cylindrique 18c. Quant au collet 7, il est solidaire d'au moins trois languettes métalliques 19 qui le prolongent longitudinalement vers l'extérieur. Ces trois languettes sont réparties autour du collet avec un espacement angulaire constant, de l'ordre de 120 °. Chacune d'elles est munie d'un coude extrême 20 par lequel elle peut s'encliqueter sur le cran 19.

Ainsi, lors de l'emboîtement de l'élément mâle B dans la tulipe 1, les languettes 19 sont d'abord en contact avec le flanc 18a qui les écartent radialement vers l'extérieur, passent sur la portée 18c, qui maintient cet écartement et assure un pré-positionnement des éléments, favorisant le contact du collet 7 avec le flanc 18a, puis s'encliquettent sur le cran 19, dès que le collet 7 vient en contact avec ce flanc 18a.

Ce mode de verrouillage, qui est déverrouillable en cas de besoin, peut s'appliquer aux tubes de tous diamètres. Il est simple, peu onéreux à réaliser, peu encombrant et fiable. En cas d'augmentation des contraintes longitudinales sur cette jonction, le verrouillage peut être complété par des soudures, réalisées dans l'intervalle entre les languettes.

Quelle que soit sa forme d'exécution, le dispositif de raccordement selon l'invention permet de généraliser l'utilisation de la technique de pose de canalisation dite à joint automatique autobuté, tout en améliorant la productivité des entreprises assurant cette pose, d'autant plus que cette dernière ne nécessite aucune compétence particulière, même pour la soudure. En effet, cette dernière s'effectue sur une faible épaisseur, sur des pièces en appui sans jeux radiaux, et ne nécessite pas une grande compétence professionnelle, comme c'est le cas avec les raccords soudés habituels.

Enfin, ce dispositif de raccordement est sans incidence sur le revêtement intérieur en matière synthétique pouvant être disposé dans un tube métallique et permet de développer ce type de tubes protégés qui, pour un même volume extérieur, offre une plus grande section, et un moindre coefficient de frottement, donc un plus grand débit et est plus facilement nettoyable.

Ce dispositif de raccordement peut faire corps avec les tubes, ou être rapporté aux extrémités de chaque tube. Il est applicable à tous les tubes en matériaux soudables ou collables, même s'il est plus intéressant pour les tubes en acier.

## Revendications

1. Dispositif de raccordement étanche de tubes pour le transport de fluide, par exemple pour adduction d'eau, dans lequel d'une part, chaque tube (2) est muni d'une extrémité cylindrique mâle (B) et d'une extrémité femelle (A) en forme de tulipe (1) apte à recevoir l'extrémité mâle (B) d'un autre tube en emprisonnant un joint (6), et dans lequel, d'autre part, la tulipe (1) comporte une partie cylindrique (3) apte à recevoir l'extrémité cylindrique mâle (B) d'un autre tube et est prolongée vers son extrémité par un collet tronconique (7) allant en s'évasant, tandis que l'embout mâle (B) est entouré par un anneau (8) biconique fixé sur lui et présentant en vis à vis du collet (7) de la tulipe un flanc tronconique pentu (8a) limitant l'engagement longitudinal de la tulipe, ledit flanc (8a) étant plus long que le collet (7) pour former, après emboîtement, zone de dépôt de la colle ou de la soudure assurant le verrouillage positif en translation longitudinale des deux tubes, **caractérisé en ce que** la tulipe (1) est solidaire d'un joint d'étanchéité (6) disposé dans une gorge (5) ménagée dans cette tulipe entre le collet tronconique (7) et la partie cylindrique (3) apte à recevoir l'extrémité cylindrique mâle, tandis que l'anneau (8) entourant l'extrémité mâle (B) est lié au tube (2) par collage ou soudage de ses deux bords circulaires, et que son flanc tronconique (8a) a la même conicité que celle du collet (7) pour former, en fin d'emboîtement, cône de positionnement radial des deux éléments.

2. Dispositif selon la revendication 1, **caractérisé en ce que** l'anneau (18) entourant l'extrémité cylindrique de chaque tube présente, à l'opposé du flanc tronconique (18a) formant butée pour le collet (7), un autre flanc tronconique (18b) constituant cran d'accrochage (19) pour les extrémités coudées (20) d'au moins trois languettes élastiques (18) de verrouillage, ces languettes étant solidaires du collet (7) qu'elles prolongent longitudinalement vers l'extérieur et autour duquel elles sont réparties avec un espace angulaire constant.

3. Dispositif selon la revendication 1, **caractérisé en ce que** l'anneau biconique (8, 18) est fixé sur l'extrémité mâle (B) du tube par soudure continue (12) de ses bords pour former, avec ce tube, une chambre (8c) de protection thermique du revêtement intérieur (13) de ce tube.

## Patentansprüche

1. Vorrichtung zum dichten Verbinden von Rohren für den Transport von Flüssigkeiten, zum Beispiel für die Wasserversorgung, in welcher einerseits jedes Rohr (2) mit einem zylindrischen männlichen Ende (B) und einem trichterförmigen (1) weiblichen Ende (A) ausgestattet ist, welches geeignet ist, das männliche Ende eines anderen Rohrs zu aufzunehmen, indem es eine Verbindung (6) umschließt, und in der andererseits der Trichter (1) einen zylindrischen Teil (3) umfasst, der geeignet ist, das zylindrische männliche Ende (B) eines anderen Rohrs aufzunehmen und welcher Trichter (1) zu seinem Ende hin durch einen kegelstupfförmigen Kragen (7) verlängert ist, der sich im weiteren Verlauf aufweitet, während der männliche Einsteckansatz (B) von einem doppelkonischen Ring (8) umgeben ist, welcher auf ihm befestigt ist und gegenüber dem Kragen (7) des Trichters eine kegelstumpfförmige, abfallende Seite (8a) aufweist, welche das längsseitige Einführen in den Trichter begrenzt, wobei die Seite (8a) länger als der Kragen (7) ist, um nach dem Zusammenfügen den Bereich für das Anbringen von Klebstoff oder der Schweißnaht zu bilden, was die positive Verblockung der zwei Rohre in Längsverschiebung gewährleistet,
**dadurch gekennzeichnet,**
**dass** der Trichter (1) mit einer Dichtungsverbindung (6) fest verbunden ist, welche in einer Vertiefung (5) vorgesehen ist, die in diesem Trichter zwischen dem kegelstumpfförmigen Kragen (7) und dem zum Aufnehmen des zylindrischen männlichen Endes geeigneten zylindrischen Teils (3) angebracht ist, während der das männliche Ende (B) umgebende Ring (8) durch Kleben oder Schweißen seiner zwei kreisförmigen Ränder mit dem Rohr (2) verbunden ist, und während seine kegelstumpfförmige Seite (8a) die gleiche Konizität wie der Kragen (7) hat, um am Ende des Zusammenfügens einen Kegel von radialer Positionierung der zwei Elemente zu bilden.

2. Vorrichtung nach Anspruch 1,
**dadurch gekennzeichnet,**
**dass** der Ring (18), der das zylindrische Ende jedes Rohrs umgibt, gegenüber der kegelstumpfförmigen Seite (18a), die einen Anschlag für den Kragen (7) bildet, eine andere kegelstumpfförmige Seite (18b) aufweist, die eine Einkerbung (19) zum Halt für die gekrümmten Enden (20) von wenigstens drei elastischen Arretierungszungen (19) darstellt, wobei diese Zungen mit dem Kragen (7) fest verbunden sind, den sie längsseitig nach außen verlängern und um welchen sie mit einem konstanten Winkelabstand verteilt sind.

3. Vorrichtung nach Anspruch 1,
**dadurch gekennzeichnet,**
**dass** der doppelkonische Ring (8, 18) durch eine durchgehende Naht an (12) seinen Ränder auf dem männlichen Ende (B) des Rohres befestigt wird, um mit diesem Rohr einen Raum (8c) zum thermischen Schutz der Innenverkleidung (13) dieses Rohrs zu bilden.

## Claims

1. A device for sealed connection of tubes for transporting fluid, for example for conveying water, in which on the one hand each tube (2) is equipped with a male cylindrical end (B) and a female end (A) in the form of a socket (1) suitable for receiving the male end (B) of another tube, enclosing a gasket (6), and in which on the other hand the socket (1) has a cylindrical part (3) suitable for receiving the male cylindrical end (B) of another tube and is extended towards its end by a tapered flange (7) which widens progressively, while the male endpiece (B) is surrounded by a double-conical ring (8) fixed thereto and having opposite the flange (7) of the socket a sloping tapered flank (8a) which restricts the longitudinal engagement of the socket, the said flank (8a) being longer than the flange (7) in order to form a zone for depositing glue or solder after the parts have been fitted together, thus to ensure that the two tubes are positively locked with respect to longitudinal translation, **characterised in that** the socket (1) is integrally formed with a sealing gasket (6) disposed in a groove (5) made in this socket between the tapered flange (7) and the cylindrical part (3) suitable for receiving the male cylindrical end, while the ring (8) surrounding the male end (B) is connected to the tube (2) by gluing or soldering its two circular rims, and **in that** its tapered flank (8a) has the same cone angle as that of the flange (7), in order to form a cone for radially positioning the two elements when fitting together is complete.

2. A device according to Claim 1, **characterised in that** the ring (18) surrounding the cylindrical end of each tube has in opposition to the tapered flank (18a) forming an abutment for the flange (7) another tapered flank (18b) constituting a hooking notch (19) for the bent ends (20) of at least three resilient locking tongues (18), these tongues being integrally formed with the flange (7), outwardly longitudinally extending the latter, around which they are distributed at a constant angular spacing.

3. A device according to Claim 1, **characterised in that** the double-conical ring (8, 18) is fixed to the male end (B) of the tube by continuous soldering (12) of its rims to form, together with this tube, a chamber (8c) for thermal protection of the internal lining (13) of this tube.
